Europäisches Patentamt

European Patent Office

Office européen des brevets

(19)

(11) Veröffentlichungsnummer: **0 109 924**

**B1**

(12) **EUROPÄISCHE PATENTSCHRIFT**

(45) Veröffentlichungstag der Patentschrift:
02.11.88

(21) Anmeldenummer: 83810347.1

(22) Anmeldetag: 04.06.83

(51) Int. Cl.⁴: **B 32 B 31/00**

(54) Verfahren und Vorrichtung zum Herstellen einer Verbundbahn.

(30) Priorität: 24.09.82 SE 8205481

(43) Veröffentlichungstag der Anmeldung:
30.05.84 Patentblatt 84/22

(45) Bekanntmachung des Hinweises auf die Patenterteilung:
02.11.88 Patentblatt 88/44

(84) Benannte Vertragsstaaten:
AT BE DE FR GB IT NL

(56) Entgegenhaltungen:
DE-B-1 272 410
DE-C-157 080
US-A-2 423 294
US-A-3 276 938
US-A-4 055 453

(73) Patentinhaber: Polytype AG, 26, Route de la Glâne,
CH- 1701 Fribourg (CH)

(72) Erfinder: Schöllkopf, Ernst, Obere Matte, CH- 1718
Rechthalten (CH)
Erfinder: Rimmele, Walter, Beaumont 18, CH- 1700
Fribourg (CH)

## Beschreibung

Die Erfindung betrifft ein Verfahren zum Herstellen einer Verbundbahn, bei dem jede zu kaschierende Seite einer Substratbahn in einem Klebstoff-Auftragswerk beschichtet und anschliessend mit einer Kaschierbahn zusammengeführt und verklebt wird, sowie eine Vorrichtung zur Durchführung des Verfahrens.

Aus der DE-B-1 272 410 ist ein Verfahren zum Herstellen einer Verbundbahn bekannt geworden, bei welchem eine Aluminiumfolie durch einen, ein Lösungsmittel enthaltenden Tank und anschliessend über eine Umlenkrolle zu einer Kaschierstation geführt wird, wo ihr wenigstens auf die eine Seite eine durch das Lösungsmittel oberflächlich erweichte Kunststoffolie aufgepresst wird.

Mit diesem Verfahren ist es nicht möglich eine Substratbahn mit Klebstoff zu beschichten, da ein dazu absolut notwendiges Dosieren der Auftragsschicht nicht vorgesehen ist.

Ein weiteres Verfahren zur Herstellung einer Verbundbahn ist aus der US-A-4 055 453 bekannt. Hier werden zur Herstellung von Dachpappe die Innenseiten der Deckschichten eines Dreifachverbundes mit Klebstoff beschichtet und auf ein und derselben Walze zum Dreifachverbund zusammengeführt.

Weder mit dem einen noch mit dem andern der vorbekannten Verfahren ist es möglich, das Rollverhalten der fertigen Verbundbahn restlos zu beeinflussen, da bekanntlich eine mit Klebstoff beschichtete Materialbahn nicht genau tangential von einer mit dem Klebstoff in Berührung kommenden Walze abgezogen werden kann. Die Materialbahn wird, je nach ihrer Eigenschaft und derjenigen des Klebstoffes, beim Ablaufen von der Walze mehr oder weniger in deren Umlaufrichtung aus der Tangente abgelenkt. Damit können die Bahnspannungen der einzelnen Materialbahnen vor dem Zusammenführen nicht einwandfrei geregelt werden.

Aufgabe der Erfindung ist es, ein Verfahren zu schaffen, mit dem es möglich ist, die einzelnen Materialbahnen einer Verbundbahn absolut spannungsgeregelt in einem Arbeitsgang zusammenzuführen.

Erfindungsgemäss ist die Aufgabe dadurch gelöst, dass die Substratbahn in einem ersten Walzenspalt zwischen zwei gegeneinander anstellbaren Auftragswalzen beidseitig mit einem Klebstoffilm beschichtet, in einem zweiten, von einer der Auftragswalzen und einer ersten Kaschierwalze gebildeten Walzenspalt mit einer ersten Kaschierbahn und in einem dritten, von der ersten Kaschierwalze und einer zweiten Kaschierwalze gebildeten Walzenspalt mit einer zweiten Kaschierbahn zusammengeführt und verklebt wird, wobei jede der am Verbund beteiligten, auf die Vorrichtung zulaufenden Bahnen vor dem Einlaufen in den Walzenspalt durch die entsprechende Walze aus ihrer Richtung abgelenkt und bis zum Verlassen des dritten Walzenspaltes ununterbrochen von einer Walzenoberfläche unterstützt ist.

Durch das erfindungsgemässe Verfahren ist es möglich:

- jede am Verbund beteiligte Bahn auf ihrem Weg durch die Vorrichtung ununterbrochen über Walzenoberflächen zu führen
- im gleichen Walzenspalt je einen genauen und separat dosierbaren Klebstoffilm auf die beiden Seiten einer Substratbahn zu übertragen
- die Ablauflinie jeder der beiden mit Klebstoff beschichteten Seiten der Substratbahn auf den zugeordneten Auftragswalzen unverrückbar festzulegen
- die Bahnspannung jeder einzelnen Bahn bis zu ihrem Kaschierpunkt zu beeinflussen
- den Anstelldruck in den Walzenspalten je nach Erfordernis zu regulieren.

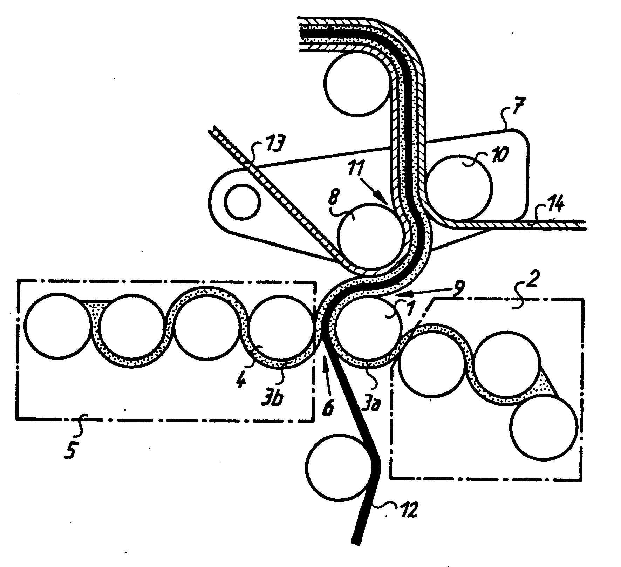

In der Zeichnung ist ein Ausführungsbeispiel einer erfindungsgemässen Vorrichtung zur Durchführung des Verfahrens schematisch dargestellt, wobei sowohl die Materialbahnen als auch die Klebstoffilme stark übertrieben dick gezeichnet sind.

In der schematisch dargestellten Vorrichtung ist eine erste Auftragswalze 1 in Maschinenwänden ortsfest dreh- und antreibbar gelagert. An diese erste Auftragswalze 1 ist ein bekanntes erstes Klebstoff-Auftragswerk 2 auf übliche Weise anstellbar, mit welchem ein genau dosierter Klebstoffilm 3a auf die erste Auftragswalze 1 übertragen wird.

Eine zweite, ebenfalls mit einem genau dosierten Klebstoffilm 3b beaufschlagbare Auftragswalze 4 ist separat antreibbar in einem zweiten Klebstoff-Auftragswerk 5 untergebracht, das auf bekannte Art verschiebbar gelagert ist, derart, dass zwischen der ersten Auftragswalze 1 und der zweiten Auftragswalze 4 ein erster Walzenspalt 6 einstellbar ist.

In einer schwenkbar gelagerten Schwinge 7 ist eine erste Kaschierwalze 8 so dreh- und antreibbar gelagert, dass mittels der Schwinge 7 zwischen der ersten Kaschierwalze 8 und der ersten Auftragswalze 1 ein zweiter Walzenspalt 9 einstellbar ist.

In der gleichen Schwinge 7 ist zudem eine zweite Kaschierwalze 10 dreh- und antreibbar angeordnet, derart, dass sie mit bekannten Mitteln an die erste Kaschierwalze 8 anstellbar ist und mit dieser zusammen einen regulierbaren dritten Walzenspalt 11 bildet.

Die beiden Auftragswalzen 1, 4 sowie die beiden Kaschierwalzen 8, 10 sind auf bekannte Art so angetrieben und anstellbar, dass sowohl individuelle Geschwindigkeitskorrekturen zur Bahnzugbeeinflussung als auch individuelle Anpressdrücke in den Walzenspalten 6, 9, 11 möglich sind.

Die zu kaschierende Substratbahn 12 wird über die erste Auftragswalze 1 in den ersten Walzenspalt 6 geleitet, wo sie beidseitig genau und separat dosierbar mit einem Klebstoffilm 3a, 3b beschichtet wird. Nach dem ersten Walzenspalt 6 wird sie über die erste Auftragswalze 1 zum zweiten Walzenspalt 9 geleitet, wobei gleichzeitig ein eindeutiges Ablösen der Substratbahn 12 von der Oberfläche der zweiten Auftragswalze 4 erfolgt.

Im zweiten Walzenspalt 9 wird über die erste Kaschierwalze 8 eine erste Kaschierbahn 13 zugeführt und mit der Substratbahn 12 verklebt. Dabei können durch Geschwindigkeitskorrektur die Bahnspannungen der beiden Bahnen 12, 13 im Moment des Verklebens genauestens aufeinander abgestimmt werden. Nach dem zweiten Walzenspalt 9 werden die beiden miteinander verklebten Bahnen 12, 13 über die erste Kaschierwalze 8 zum dritten Walzenspalt 11 geleitet, wobei gleichzeitig ein eindeutiges Ablösen der noch offenen Seite der Substratbahn 12 von der Oberfläche der ersten Auftragswalze 1 erfolgt.

Im dritten Walzenspalt 11 wird über die zweite Kaschierwalze 10 eine zweite Kaschierbahn 14 zugeführt und mit der Substratbahn 12 zu einem Dreifachverbund verklebt, wobei die Bahnspannung der zweiten Kaschierbahn 14 im Moment des Verklebens zwecks Beeinflussung des Rollverhaltens der fertigen Verbundbahn durch Geschwindigkeitskorrektur der zweiten Kaschierwalze 10 regulierbar ist.

Jedes der beiden Klebstoff-Auftragswerke 2, 5 ist auf bekannte Art separat abstellbar, womit es ohne weiteres möglich ist, eine Verbundbahn aus nur zwei Materialbahnen herzustellen.

Um nach dem erfindungsgemässen Verfahren Verbundbahnen aus den verschiedensten Materialien herstellen und die entsprechend notwendigen Klebstoffe verwenden zu können, müssen die Oberflächentemperaturen sämtlicher Walzen regulierbar sein, was auf bekannte, nicht speziell gezeichnete Art durch Beheizen oder durch Kühlen verwirklicht wird.

**Patentansprüche**

1. Verfahren zum Herstellen einer Verbundbahn, bei dem jede zu kaschierende Seite einer Substratbahn mit einem Klebstoff-Auftragswerk beschichtet und anschliessend mit einer Kaschierbahn zusammengeführt und verklebt wird, dadurch gekennzeichnet, dass die Substratbahn (12) in einem ersten Walzenspalt (6) zwischen zwei gegeneinander anstellbaren Auftragswalzen (1, 4) beidseitig mit einem Klebstofffilm (3a, 3b) beschichtet, in einem zweiten, von einer der Auftragswalzen (1 od. 4) und einer ersten Kaschierwalze (8) gebildeten Walzenspalt (9) mit einer ersten Kaschierbahn (13) und in einem dritten, von der ersten Kaschierwalze (8) und einer zweiten Kaschierwalze (10) gebildeten Walzenspalt (11) mit einer zweiten Kaschierbahn (14) zusammengeführt und verklebt wird, wobei jede der am Verbund beteiligten, auf die Vorrichtung zulaufenden Bahnen (12, 13, 14) vor dem Einlaufen in den Walzenspalt durch die entsprechende Walze (1, 8 resp. 10) aus ihrer Richtung abgelenkt und bis zum Verlassen des dritten Walzenspaltes (11) ununterbrochen von einer Walzenoberfläche unterstützt ist.

2. Verfahren nach Anspruch 1, dadurch gekennzeichnet, dass die Bahnspannungen der zulaufenden Bahnen (12, 13, 14) in der Vorrichtung individuell beeinflussbar sind.

3. Vorrichtung zur Durchführung des Verfahrens nach Anspruch 1, dadurch gekennzeichnet, dass für das Beschichten der Substratbahn (12) die Auftragswalzen (1, 4) zweier Klebstoff-Auftragswerke (2, 5) gegeneinander anstellbar angeordnet sind, und dass in einer schwenkbar gelagerten Schwinge (7) eine erste, auf eine der Auftragswalzen (1 od. 4) anstellbare Kaschierwalze (8) und eine zweite, auf die erste Kaschierwalze (8) anstellbare Kaschierwalze (10) angeordnet sind.

4. Vorrichtung nach Anspruch 3, dadurch gekennzeichnet, dass mindestens eines der Klebstoff-Auftragswerke (2, 5) abstellbar ist.

5. Vorrichtung nach Anspruch 3, dadurch gekennzeichnet, dass jede am Bahntransport beteiligte Walze (1, 4, 8, 10) regulierbar angetrieben ist.

6. Vorrichtung nach Anspruch 3, dadurch gekennzeichnet, dass die Oberflächentemperaturen aller Walzen einzeln regulierbar sind.

**Claims**

1. Method for producing a composite web, in which each side to be lined of a substrate web is coated by an adhesive applicator and then guided together with and adhered to a lining web, characterised in that in a first roll gap (6) between two mutually adjustable applicator rollers (1, 4), the substrate web (12) is coated on both sides with an adhesive film (3a, 3b), in a second roll gap (9) formed by one of the applicator rollers (1 or 4) and a first lining roller (8), it is guided together with and adhered to a first lining web (13) and in a third roll gap (11) formed by the first lining roller (8) and a second lining roller (10) it is guided together with and adhered to a second lining web (14), whereby each of the webs (12, 13, 14) forming part of the composite structure and travelling towards the apparatus, before entering the roll gap, is deflected from its direction by the corresponding roller (1, 8 or 10) and until it leaves the third roll gap (11) is supported continuously by a roller surface.

2. Method according to Claim 1, characterised in that the web tensions of the incoming webs (12, 13, 14) can be influenced individually in the apparatus.

3. Apparatus for carrying out the method according to Claim 1, characterised in that for the coating of the substrate web (12), the applicator rollers (1, 4) of two adhesive applicators (2, 5) are mutually adjustably arranged and that located in a pivotally mounted rocking arm (7) is a first lining roller (8) which can be adjusted with respect to one of the applicator rollers (1 or 4) and a second lining roller (10) which can be adjusted with respect to the first lining roller (8).

4. Apparatus according to claim 3, characterised in that at least one of the adhesive applicators (2, 5) can be stopped.

5. Apparatus according to Claim 3, characterised in that each roller (1, 4, 8, 10) involved in conveying the web, is driven in an adjustable manner.

6. Apparatus according to Claim 3, characterised in that the surface temperatures of all the rollers can be regulated individually.

## Revendications

1. Procédé pour réaliser une bande composite, en partant d'une bande de substrat qu'on enduit d'une couche d'adhésif sur chacune de ses faces de collage au mogen d'un système d'application d'adhésif, pour amener ensuite en regard de chaque face une autre bande qu'on y fixe par collage; procédé caractérisé en ce qu'on fait passer la bande de substrat (12) dans un premier interstice (6) ménagé entre deux rouleaux d'application (1, 4) dont l'écartement est réglable, pour déposer sur les deux faces de la bande de substrat (12) un film adhésif (3a, 3b) dans ce premier interstice (6); en ce qu'on fait passer ensuite la bande de substrat (12) dans un deuxième interstice (9), ménagé entre l'un des rouleaux d'application (1 ou 4) et un premier rouleau de collage (13), pour fixer par collage une première bande extérieure (8) à la bande de substrat; et en ce qu'on fait alors passer la bande de substrat (12) dans un troisième interstice (11) ménagé entre le premier rouleau de collage (8) et un deuxième rouleau de collage (14), pour fixer par collage une deuxième bande extérieure (14) à la bande de substrat (12); chacune des bandes élémentaires (12, 13, 14) servant à constituer la bande composite et introduites à cet effet dans la machine s'y trouvant déviée de sa direction d'arrivée et guidée de manière ininterrompue par la surface d'un rouleau de la machine, jusqu'au moment où elle quitte le troisième interstice précité (11).

2. Procèdé selon la revendication 1, caractérisé en ce qu'on règle séparément les tensions des diverses bandes (12, 13, 14) introduites dans la machine.

3. Dispositif pour la mise en oeuvre du procédé selon la revendication 1, caractérisé en ce qu'il comporte deux sytème d'application d'adhésif (2, 5) ayant deux rouleaux d'application (1, 2) en regard l'un de l'autre et d'écartement réglable, pour enduire la bande de substrat (12), le dispositif comportant, en outre, une monture oscillante (7) pourvue d'un premier rouleau de collage (8) d'écartement réglable par rapport à l'un des rouleaux d'application (1 ou 4), et d'un deuxième rouleau de collage (10) d'écartement réglable par rapport au premier rouleau de collage (8).

4. Dispositif selon la revendication 3, caractérisé en ce qu'au moins l'un des systèmes d'application d'adhésif (2, 5) est réglable en position.

5. Dispositif selon la revendication 3, caractérisé en ce que chacun des rouleaux (1, 4, 8, 10) qui participent au déplacement des bandes est entraîné de manière réglable.

6. Dispositif selon la revendication 3, caractérisé en ce que les températures de surface de tous les rouleaux sont réglables chacune individuellement.